# EUROPEAN PATENT APPLICATION

(11) **EP 4 723 315 A1**
(43) Date of publication of application: **08.04.2026**
(21) Application number: 25198934.9
(22) Date of filing: 29.08.2025
(51) Int. Cl.: H01M 50/107, H01M 50/131, H01M 50/213, H01M 50/588, H01M 50/124, H01M 50/264, H01M 50/59

(54) **ENERGY STORAGE CELL AND ENERGY STORAGE DEVICE**

(30) Priority: 07.10.2024 JP 2024176112
(71) Applicant: TOYOTA JIDOSHA KABUSHIKI KAISHA, Toyota-shi, Aichi-ken 471-8571 (JP)
(72) Inventor: TANABE, Yukinari, Toyota-shi, Aichi-ken, 471-8571 (JP)
(74) Representative: TBK

(57) **Abstract**

An energy storage cell has: a cell main body shaped as a solid cylinder; and an insulating film covering an outer peripheral surface of the cell main body, and having an easily-broken portion that breaks easily.

## Description

### BACKGROUND

### Technical Field

The present disclosure relates to an energy storage cell and an energy storage device.

### Related Art

Japanese Patent Application Laid-Open (JP-A) No. 2010-160977 discloses a battery (energy storage cell) in which the outer peripheral surface of a solid-cylindrical battery main body (cell main body) is covered by an exterior film (an insulating film).

### SUMMARY

In the above-described prior art, at the time of disassembling the energy storage cell such as at the time of recycling, it is difficult to remove the insulating film from the cell main body.

An object of the present disclosure is to provide an energy storage cell in which an insulating film can easily be removed from a cell main body, and an energy storage device having the energy storage cell.

An energy storage cell of a first aspect of the present disclosure has a cell main body shaped as a solid cylinder, and an insulating film covering an outer peripheral surface of the cell main body and having an easily-broken portion that breaks easily.

In the first aspect, the outer peripheral surface of the solid-cylindrical cell main body is covered by the insulating film. The insulating film has the easily-broken portion that breaks easily. The insulating film can easily be removed from the cell main body due to the insulating film being broken at this easily-broken portion.

Note that it suffices for the "easily-broken portion" of the first aspect to be structured such that the insulating film can be broken at that region due to the application of external force. The easily-broken portion may be a structure in which holes are formed locally in the insulating film, or the insulating film is weakened by the thickness thereof being made to be thin, or may be another structure.

In a second aspect of the present disclosure, in the first aspect, the easily-broken portion extends in a peripheral direction of the cell main body.

In the second aspect, because the easily-broken portion extends in the peripheral direction of the cell main body, the insulating film can easily be removed from the cell main body while a deterioration in the insulating ability of the insulating film is suppressed.

In a third aspect of the present disclosure, in the second aspect, the easily-broken portion has a thin-walled portion at which a thickness of the insulating film is locally thin.

In the third aspect, because the easily-broken portion has the above-described thin-walled portion, the insulating film can be broken easily with the thin-walled portion being the starting point. This "thickness of the insulating film is locally thin" includes structures in which the thickness is locally zero.

In a fourth aspect of the present disclosure, in the third aspect, the thin-walled portion extends in an annular form continuously in the peripheral direction of the cell main body.

In the fourth aspect, the thin-walled portion, at which the thickness of the insulating film is locally thin, extends in an annular form continuously in the peripheral direction of the cell main body. Therefore, the insulating film can be removed from the cell main body more easily (i.e., by a weaker force).

In a fifth aspect of the present disclosure, in any one of the first aspect through the fourth aspect, the cell main body has a recess at the outer peripheral surface, and the easily-broken portion is provided at a portion of the insulating film which portion faces the recess.

In the fifth aspect, the easily-broken portion is provided at the insulating film at a portion that faces the recess provided at the outer peripheral surface of the cell main body. Therefore, a deterioration in the insulating ability due to the provision of the easily-broken portion at the insulating film can be suppressed.

In a sixth aspect of the present disclosure, in any one of the first aspect through the fifth aspect, a portion of the outer peripheral surface of the cell main body, which portion overlaps with the easily-broken portion in a radial direction of the cell main body, is covered by an insulating material.

In the sixth aspect, at the outer peripheral surface of the cell main body, the portion that overlaps with the easily-broken portion of the insulating film in the radial direction of the cell main body is covered by the insulating material. Therefore, a deterioration in the insulating ability due to the provision of the easily-broken portion at the insulating film can be suppressed.

In a seventh aspect of the present disclosure, in the sixth aspect, a dimension of the insulating material in an axial direction of the cell main body is set to be larger than a dimension of the easily-broken portion in the axial direction.

In the seventh aspect, because the dimensions of the insulating material and the easily-broken portion are set as described above, even in a case in which the easily-broken portion breaks at an unplanned time, the cell main body being exposed via the easily-broken portion can be suppressed, and the insulating ability can be ensured.

An energy storage cell of an eighth aspect of the present disclosure has a cell main body shaped as a solid cylinder, an insulating film covering an outer peripheral surface of the cell main body and having an end surface covering portion that covers an axial direction end surface of the cell main body, and an electrically conductive portion that is electrically conductive, that is provided at a surface of the insulating film, and that has a peripheral direction extending portion extending in a peripheral direction of an outer peripheral surface of the insulating film, and a pair of contact portions extending from both ends of the peripheral direction extending portion and reaching the end surface covering portion.

In the eighth aspect, the insulating film that covers the outer peripheral surface of the solid-cylindrical cell main body has the end surface covering portion that covers an axial direction end surface of the cell main body. The electrically conductive portion that is electrically conductive is provided at a surface of the insulating film. The electrically conductive portion has the peripheral direction extending portion extending in the peripheral direction of the outer peripheral surface of the insulating film, and the pair of contact portions extending from both ends of the peripheral direction extending portion and reaching the end surface covering portion. Due to the positive electrode and negative electrode of a power source being made to contact the pair of contact portions and the electrically conductive portion being energized, the insulating film can be broken by the generated heat of the electrically conductive portion. Due thereto, the insulating film can easily be removed from the cell main body.

An energy storage cell of a ninth aspect of the present disclosure has a cell main body shaped as a solid cylinder, an insulating film covering an outer peripheral surface of the cell main body and having an end surface covering portion that covers an axial direction end surface of the cell main body, and an insulating ring provided between the end surface of the cell main body and the end surface covering portion, and having projections at a surface facing the end surface covering portion.

In the ninth aspect, the insulating film that covers the outer peripheral surface of the solid-cylindrical cell main body has the end surface covering portion that covers an axial direction end surface of the cell main body. The insulating ring is provided between this end surface covering portion and an axial direction end surface of the cell main body. The insulating ring has the projections at a surface facing the end surface covering portion. Therefore, for example, due to the cell main body being pushed in the axial direction with respect to the insulating film from the axial direction another end side, the end surface covering portion can be broken by the projections. Due thereto, the insulating film can be easily removed from the cell main body.

In an energy storage cell of a tenth aspect of the present disclosure, in the ninth aspect, the projections are provided respectively at both sides in a radial direction across a center of the insulating ring.

In the tenth aspect, due to the cell main body being pushed from the axial direction another end side in the axial direction with respect to the insulating film, the end surface covering portion can be broken by the projections that are provided at radial direction both sides of the insulating ring as described above. Due thereto, the insulating film can be even more easily removed from the cell main body.

In an energy storage cell of an eleventh aspect of the present disclosure, in the ninth aspect or the tenth aspect, the projections have acute-angled corner portions, and the corner portions contact the end surface covering portion.

In the eleventh aspect, because the acute-angled corner portions of the projections of the insulating ring contact the end surface covering portion of the insulating film, it is easy to break the end surface covering portion.

An energy storage device of a twelfth aspect of the present disclosure has a holder in which a cell insertion hole is formed, and the energy storage cell of any one of the first aspect through the seventh aspect that is inserted in the cell insertion hole, and at which an outer peripheral surface of the insulating film is fixed to an inner peripheral surface of the cell insertion hole at a place that is offset from the easily-broken portion in an axial direction of the cell main body.

In the twelfth aspect, an energy storage cell is inserted in the cell insertion hole formed in the holder. The outer peripheral surface of the insulating film of the energy storage cell is fixed to the inner peripheral surface of the cell insertion hole at a place that is offset from the easily-broken portion in the axial direction of the cell main body. At the time of removing the cell main body from the holder, the insulating film is broken at the easily-broken portion due to the cell main body being pushed in the axial direction of the cell main body, from the side opposite the side toward which the easily-broken portion is offset as described above. Due thereto, the insulating film is separated into a portion that is fixed to the inner peripheral surface of the cell insertion hole, and a portion that is not fixed thereto. Due thereto, the cell main body can be removed from the holder together with the portion that is not fixed. Thereafter, the portion that is not fixed can be easily removed from the cell main body.

An energy storage device of a thirteenth aspect of the present disclosure has a holder in which a cell insertion hole is formed, and the energy storage cell of the eighth aspect that is inserted in the cell insertion hole, and at which an outer peripheral surface of the insulating film is fixed to an inner peripheral surface of the cell insertion hole at a portion overlapping with the pair of contact portions.

In the thirteenth aspect, an energy storage cell is inserted in the cell insertion hole formed in the holder. The outer peripheral surface of the insulating film of the energy storage cell is fixed to the inner peripheral surface of the cell insertion hole at a portion overlapping with the pair of contact portions of the electrically conductive portion. At the time of removing the cell main body from the holder, due to the positive electrode and negative electrode of a power source being made to contact the pair of contact portions and the electrically conductive portion being energized, the insulating film is broken by the generated heat of the electrically conductive portion. Due thereto, the insulating film is separated into a portion that is fixed to the inner peripheral surface of the cell insertion hole, and a portion that is not fixed thereto. Due thereto, the cell main body can be removed from the holder together with the portion that is not fixed. Thereafter, the portion that is not fixed can be easily removed from the cell main body.

An energy storage device of a fourteenth aspect of the present disclosure has a holder in which a cell insertion hole is formed, and the energy storage cell of any one of the ninth aspect through the eleventh aspect that is inserted in the cell insertion hole, and at which an outer peripheral surface of the insulating film is fixed to an inner peripheral surface of the cell insertion hole.

In the fourteenth aspect, an energy storage cell is inserted in the cell insertion hole formed in the holder. The outer peripheral surface of the insulating film of the energy storage cell is fixed to the inner peripheral surface of the cell insertion hole. At the time of removing the cell main body from the holder, the one end covering portion of the insulating film is broken by the projections of the insulating ring due to the cell main body being pushed from the axial direction another end side, in the axial direction with respect to the holder and the insulating film. The cell main body can thereby be easily removed from the holder and the insulating film.

In an energy storage device of a fifteenth aspect of the present disclosure, in any one of the twelfth aspect through the fourteenth aspect, the outer peripheral surface of the insulating film is adhered to the inner peripheral surface of the cell insertion hole.

In the fifteenth aspect, it is difficult to remove the portion of the insulating film, at which portion the outer peripheral surface is adhered to the inner peripheral surface of the cell insertion hole, from the holder. However, owing to the structure of any one of the twelfth aspect through the fourteenth aspect, it is easy to remove the cell main body from the holder.

As described above, in accordance with the present disclosure, an insulating film can be easily removed from a cell main body.

### BRIEF DESCRIPTION OF THE DRAWINGS

Exemplary embodiments of the present disclosure will be described in detail based on the following figures, wherein:
Fig 1 is a perspective view illustrating an energy storage device relating to a first embodiment;
Fig. 2 is a front view illustrating a portion of the energy storage device relating to the first embodiment;
Fig. 3 is a front view illustrating a holder of the energy storage device relating to the first embodiment;
Fig. 4 is a perspective view illustrating an energy storage cell of the energy storage device relating to the first embodiment;
Fig. 5 is a first cross-sectional view illustrating a portion of the energy storage device relating to the first embodiment;
Fig. 6 is a second cross-sectional view illustrating a portion of the energy storage device relating to the first embodiment;
Fig. 7 is a cross-sectional view corresponding to Fig. 6 and illustrating a state in the midst of removing a cell main body;
Fig. 8 is a cross-sectional view illustrating a portion of an energy storage device relating to a comparative example;
Fig. 9 is a cross-sectional view illustrating a portion of an energy storage cell relating to a first modified example of the first embodiment;
Fig. 10 is a cross-sectional view illustrating a portion of an energy storage cell relating to a second modified example of the first embodiment;
Fig. 11 is a perspective view illustrating an energy storage cell relating to a second embodiment and a portion of a push-out rod used at a time of disassembling the cell;

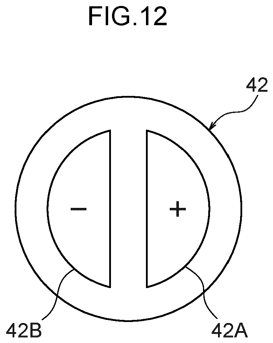

Fig. 12 is an end view illustrating the push-out rod;
Fig. 13 is a cross-sectional view illustrating a portion of an energy storage cell relating to a third embodiment;
Fig. 14 is a front view illustrating an insulating ring of the energy storage cell relating to the third embodiment; and
Fig. 15 is an arrow view in which the structure illustrated in Fig. 13 is viewed from the direction of arrow F15 of Fig. 13.

### DETAILED DESCRIPTION

### <First Embodiment>

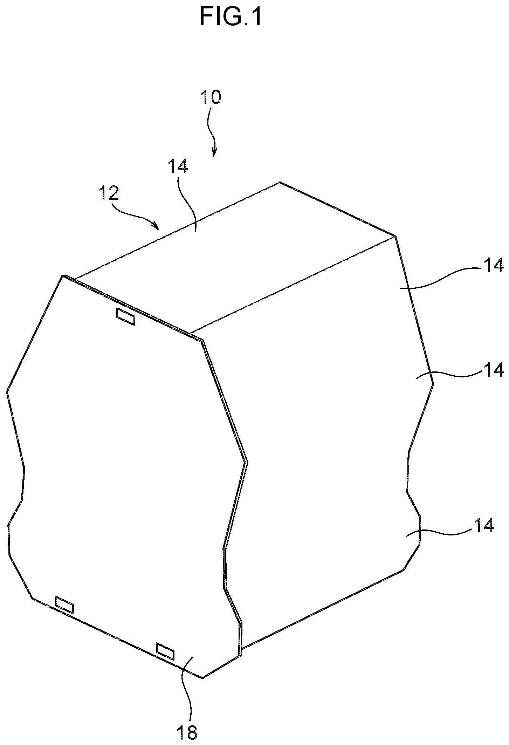

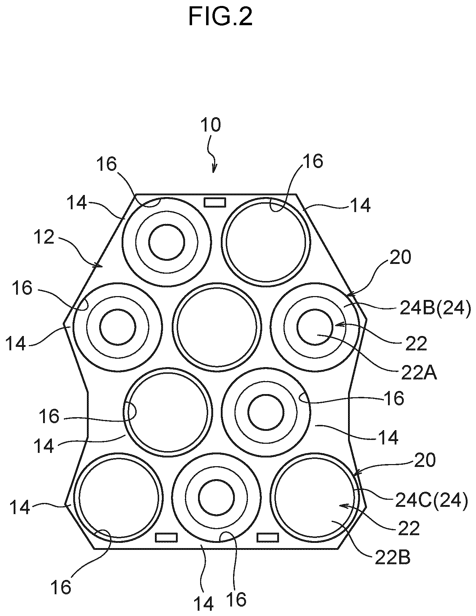

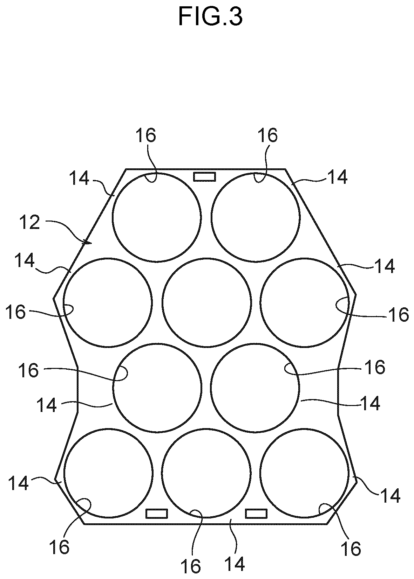

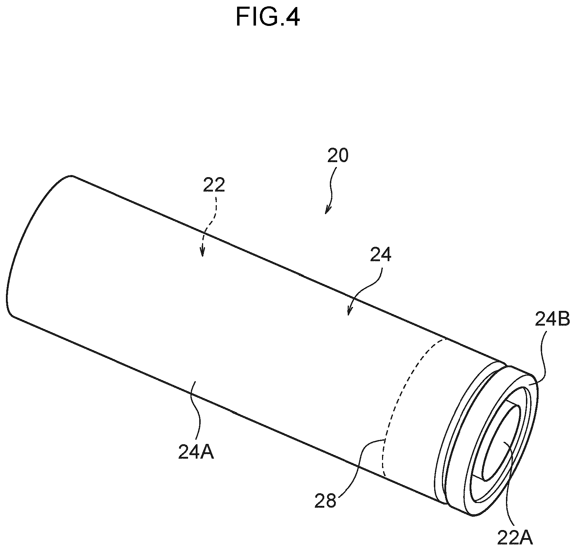

An energy storage device 10 relating to a first embodiment of the present disclosure is described hereinafter with reference to Fig. 1 through Fig. 10. As illustrated in Fig. 1 and Fig. 2, the energy storage device 10 relating to the present embodiment has a holder 12 and plural energy storage cells (solid-cylindrical batteries) 20.

As illustrated in Fig. 1 through Fig. 3, the holder 12 is manufactured by injection molding of a resin for example, and integrally has plural cell insertion portions 14 that are cylindrical tube shaped. The plural cell insertion portions 14 are disposed so as to be lined-up with one another in a radial direction. The inner sides of the cell insertion portions 14 are cell insertion holes 16 respectively, and the energy storage cells 20 are inserted in the respective cell insertion holes 16.

The axial direction both end portions of the respective cell insertion holes 16 are closed by plate-shaped members 18 that are mounted to the holder 12. The plural energy storage cells 20 are electrically connected via plural bus bars (not illustrated) that are mounted to these plate-shaped members 18. A battery pack is thereby structured.

As illustrated in Fig. 2 and Fig. 4 through Fig. 6, the energy storage cell 20 is structured by a cell main body 22 formed in a solid cylindrical shape, and an insulating film (cell film) 24 covering the outer peripheral surface of the cell main body 22. The cell main body 22 is a lithium ion battery for example. A positive electrode 22A is provided at an axial direction one end portion of the cell main body 22, and a negative electrode 22B is provided at the axial direction another end portion of the cell main body 22.

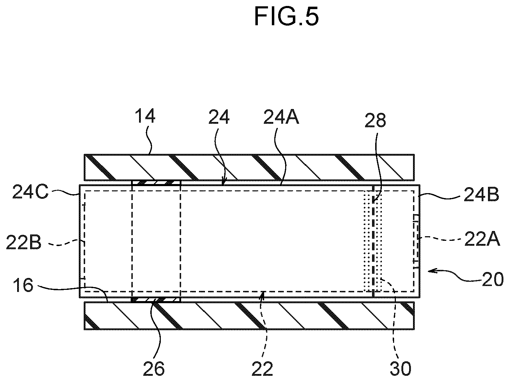

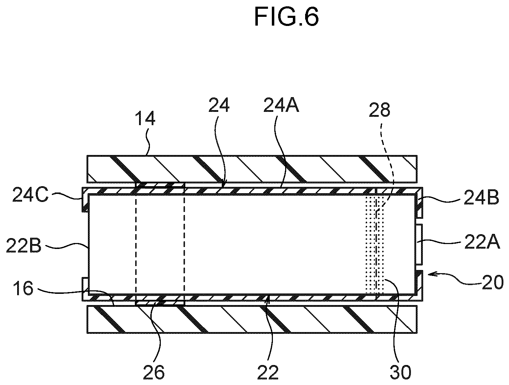

The insulating film 24 is a film formed from a resin that is heat shrinkable (e.g., is formed from vinyl chloride), and is tightly fit to the outer peripheral surface of the cell main body 22 by heat shrinkage. As illustrated in Fig. 5 and Fig. 6, the insulating film 24 integrally has an outer periphery covering portion 24A shaped as a cylindrical tube and covering the outer peripheral surface of the cell main body 22, a one end covering portion 24B extending from an axial direction one end portion of the outer periphery covering portion 24A toward the radial direction inner side of the outer periphery covering portion 24A and covering an axial direction one end surface of the cell main body 22, and another end covering portion 24C extending from an axial direction another end portion of the outer periphery covering portion 24A toward the radial direction inner side of the outer periphery covering portion 24A and covering an axial direction another end surface of the cell main body 22.

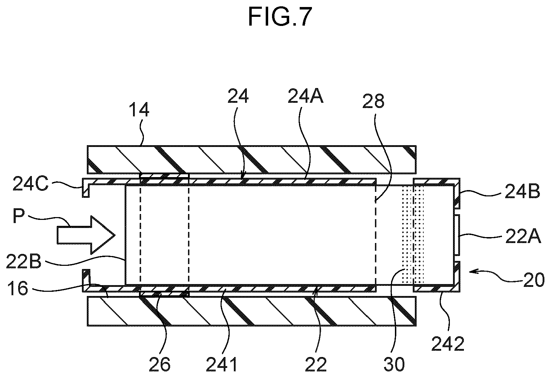

Note that the insulating film 24 does not have to be heat shrinkable. Further, in Fig. 5, among the cell insertion portions 14 and the energy storage cells 20 of the holder 12, only the cell insertion portion 14 is illustrated in cross-section. In Fig. 6 and Fig. 7, of the cell insertion portion 14, the insulating film 24 and the cell main body 22, only the cell insertion portion 14 and the insulating film 24 are illustrated in cross-sections.

A portion of the outer peripheral surface of the insulating film 24 (i.e., of the outer peripheral surface of the outer periphery covering portion 24A) is adhered (fixed) by an adhesive 26 to a portion of the inner peripheral surface of the cell insertion hole 16. The adhesive 26 is disposed in the gap between the outer peripheral surface of the outer periphery covering portion 24A and the cell insertion hole 16, at further toward the axial direction another end side of the energy storage cell 20 (the another end covering portion 24C side) than the axial direction central portion of the energy storage cell 20. This adhesive 26 extends in an annular form continuously in the peripheral direction of the insulating film 24. Note that, for example, the outer peripheral surface of the insulating film 24 may be fixed to the inner peripheral surface of the cell insertion hole 16 by using, instead of the adhesive 26, an annular fixing tool formed from rubber or the like.

A perforation line 28 is formed at the outer periphery covering portion 24A of the insulating film 24, at a region that is offset from the adhesive 26 toward one side in the axial direction of the cell main body 22. The region of the outer periphery covering portion 24A at which region the perforation line 28 is formed is an easily-broken portion. The perforation line 28 is a structure in which many slits (no reference numeral given thereto), which pass through the outer periphery covering portion 24A in the radial direction of the cell main body 22 and extend in the peripheral direction of the cell main body 22, are lined-up at a uniform interval in the peripheral direction of the cell main body 22. At the places where the many slits (corresponding to the "thin-walled portions" in the present disclosure) are formed, the thickness of the insulating film is locally thin (and here, is zero).

The easily-broken portion (hereinafter called "easily-broken portion 28") at which the perforation line 28 is formed is structured such that the regions between the many slits break easily due to the application of external force. This easily-broken portion 28 is provided in an annular form so as to circle the outer periphery covering portion 24A in the peripheral direction.

The portion of the outer peripheral surface of the cell main body 22, which portion overlaps with the above-described easily-broken portion (perforation line) 28 in the radial direction of the cell main body 22, is covered by a potting resin 30 that is an insulating material. The potting resin 30 is an insulating resin such as urethane resin, epoxy resin or silicone resin for example, and is disposed between the outer periphery covering portion 24A and the cell main body 22. The potting resin 30 extends in an annular form continuously in the peripheral direction of the cell main body 22. The width dimension of the potting resin 30 in the axial direction of the cell main body is set to be larger than the width dimension of the easily-broken portion in the axial direction.

Operation and effects of the present embodiment are described next.

At the energy storage cell 20 of the above-described structure, the outer peripheral surface of the solid-cylindrical cell main body 22 is covered by the insulating film 24. The insulating film 24 has the easily-broken portion 28 that breaks easily. At the time of disassembling the energy storage cell 20 such as at the time of recycling, it is easy to remove the insulating film 24 from the cell main body 22 by breaking the insulating film 24 at the easily-broken portion 28.

Further, because the easily-broken portion 28 extends in the peripheral direction of the cell main body 22, it is easy to remove the insulating film 24 from the cell main body 22, while suppressing a deterioration in the insulating ability of the insulating film 24. Moreover, because the easily-broken portion 28 has the many slits (thin-walled portions, no reference numeral given thereto) at which the thickness of the insulating film 24 is locally thin (is zero here), it is easy to break the easily-broken portion 28 with the many slits being the starting point.

The portion of the outer peripheral surface of the cell main body 22, which portion overlaps with the easily-broken portion 28 in the radial direction of the cell main body 22, is covered by the potting resin 30. Therefore, a deterioration in the insulating ability due to the provision of the easily-broken portion (the perforation line) 28 at the insulating film 24 can be suppressed. Moreover, the width dimension of the potting resin 30 in the axial direction of the cell main body 22 is set to be larger than the width dimension of the easily-broken portion 28 in the axial direction of the cell main body 22. Therefore, even in a case in which the easily-broken portion 28 breaks at an unplanned time, the cell main body 22 being exposed via the easily-broken portion 28 can be suppressed, and the insulating ability can be ensured.

Further, in the energy storage device 10 relating to the present embodiment, the energy storage cells 20 are inserted in the cell insertion holes 16 that are formed in the holder 12. The outer peripheral surface of the insulating film 24 of the energy storage cell 20 is fixed to the inner peripheral surface of the cell insertion hole 16 at a place that is offset from the easily-broken portion 28 toward the axial direction another end side of the cell main body 22.

At the time of removing the cell main body 22 from the holder 12, the insulating film 24 is broken at the easily-broken portion 28 due to the cell main body 22 being pushed from the axial direction another end side (refer to arrow P in Fig. 7). Due thereto, the insulating film 24 is separated into a portion 241 that is fixed to the inner peripheral surface of the cell insertion hole, and a portion 242 that is not fixed thereto. Due thereto, the cell main body 22 can be removed from the holder 12 together with the portion 242 that is not fixed. Thereafter, the portion 242 that is not fixed can be easily removed from the cell main body 22.

Further, in the present embodiment, the outer peripheral surface of the insulating film 24 is adhered to the inner peripheral surface of the cell insertion hole 16. Therefore, at the insulating film 24, it is difficult to remove the portion 241, whose outer peripheral surface is adhered to the inner peripheral surface of the cell insertion hole 16, from the holder 12, but, owing to the above-described structure, removal of the cell main body 22 from the holder 12 is easy. As a result, disassembly of the energy storage device 10 is easy.

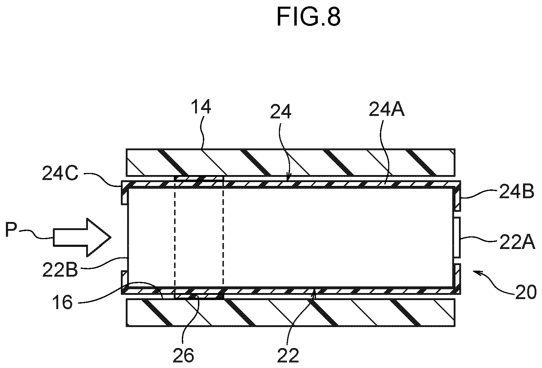

Namely, in a structure in which the insulating film 24 does not have the easily-broken portion 28 as in a comparative example illustrated in Fig. 8, even if the cell main body 22 is pushed from the axial direction another end side thereof, it is difficult to remove the cell main body 22 from the holder 12 because the insulating film 24 is adhered strongly to the holder 12 by the adhesive 26. Therefore, disassembly of the energy storage device is difficult. However, this can be overcome in the present embodiment.

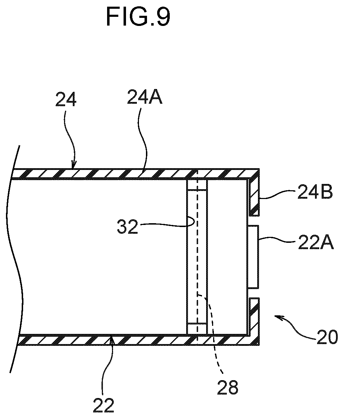

Note that, as in a first modified example illustrated in Fig. 9, in a case in which a recess 32 that extends in the peripheral direction is formed at the outer peripheral surface of the cell main body 22, it is preferable to provide the easily-broken portion (here, the perforation line) 28 at a portion of the insulating film 24 which portion faces the recess without contacting the recess. Due thereto, a deterioration in the insulating ability due to the provision of the easily-broken portion 28 at the insulating film 24 can be suppressed. The above-described recess 32 is, for example, a caulking portion that is formed in the case of the cell main body 22.

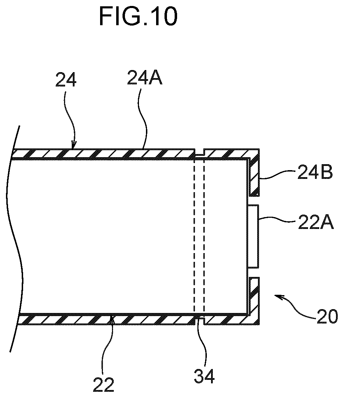

Further, as in a second modified example illustrated in Fig. 10, a thin-walled portion 34, at which the thickness of the insulating film 24 is locally thin, may be extended in the peripheral direction of the cell main body 22 and made to be the easily-broken portion. The insulating film 24 can be easily broken with this thin-walled portion 34 being the starting point. Further, because the thin-walled portion 34 extends in an annular form continuously in the peripheral direction of the cell main body 22, the insulating film 24 can be removed from the cell main body 22 more easily (i.e., by a weaker force).

Other embodiments of the present disclosure are described next. Note that structures and operations that are basically similar to those of the first embodiment are denoted by the same reference numerals as in the first embodiment, and description thereof is omitted.

### <Second Embodiment>

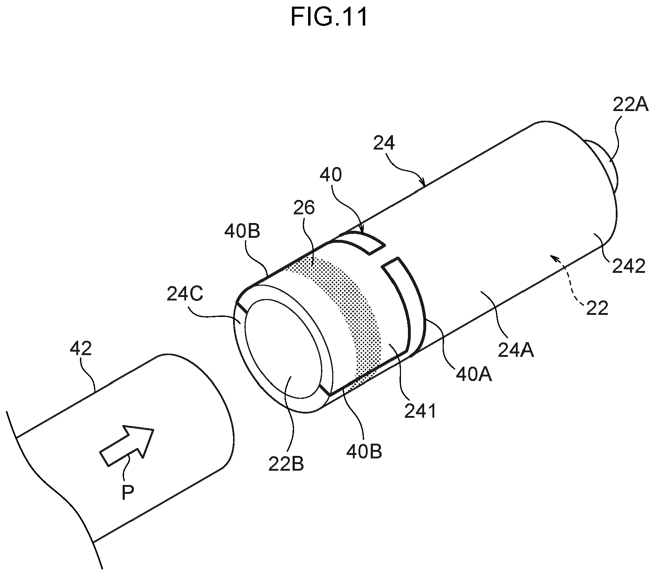

The energy storage cell 20 relating to a second embodiment of the present disclosure, and a portion of a push-out rod 42 used at the time of disassembling the cell, are illustrated in a perspective view in Fig. 11. In this energy storage cell 20, the insulating film 24 does not have the easily-broken portion 28. Instead, in this energy storage cell 20, an electrically conductive portion 40 is provided at the surface of the insulating film 24. In the same way as in the energy storage device 10 relating to the first embodiment, in the energy storage device (not illustrated) that is structured to include a plurality of these energy storage cells 20, the plural energy storage cells 20 are inserted into the plural cell insertion holes 16 of the holder 12 (refer to Fig. 1 through Fig. 3) respectively, and the outer peripheral surface of the insulating film 24 is adhered to the inner peripheral surface of the cell insertion hole 16 by the adhesive 26.

The electrically conductive portion 40 is, for example, structured by a coating of plating that is electrically conductive, and is provided at the surface of the outer periphery covering portion 24A at the axial direction another end portion side (the negative electrode 22B side) of the cell main body 22. This electrically conductive portion 40 has a peripheral direction extending portion 40A that extends in the peripheral direction of the outer peripheral surface of the outer periphery covering portion 24A, and a pair of contact portions 40B extending from the both ends of the peripheral direction extending portion and reaching the another end covering portion 24C. In this embodiment, the another end covering portion 24C corresponds to the "end surface covering portion" of the present disclosure.

The peripheral direction extending portion 40A is formed in an annular shape (a substantial C shape) in the peripheral direction of the outer peripheral surface of the outer periphery covering portion 24A. The pair of contact portions 40B extend from the both ends of the peripheral direction extending portion 40A toward the axial direction another end side of the cell main body 22, and thereafter, extend toward sides opposite one another in the peripheral direction of the cell main body 22, and are bent toward the axial direction another end side of the cell main body 22 at positions opposite one another across the axis of the cell main body 22, and extend all the way to the another end covering portion 24C. The outer peripheral surface of the insulating film 24 is adhered (fixed) to the inner peripheral surface of the cell insertion hole 16 at portions overlapping with the pair of contact portions 40B.

In the present embodiment, at the time of removing the insulating film 24 from the cell main body 22, due to the positive electrode and negative electrode of a power source being made to contact the pair of contact portions 40B and the electrically conductive portion 40 being energized, the insulating film 24 can be broken by the generated heat of the electrically conductive portion 40. Due thereto, the insulating film 24 can be easily removed from the cell main body 22.

Further, in the present embodiment, at the time of removing the cell main body 22 from the holder 12, an end surface of the push-out rod 42 is pushed to hit the axial direction another end surface of the cell main body 22, and a positive electrode 42A and a negative electrode 42B provided at the end surface of the push-out rod 42 are made to contact the pair of contact portions 40B. The positive electrode 42A and the negative electrode 42B are electrically connected to a power source. Due to the electrically conductive portion 40 being energized, the insulating film 24 is broken by the generated heat of the electrically conductive portion 40. Then, the insulating film 24 is separated into the portion 241 that is fixed to the inner peripheral surface of the cell insertion hole 16, and the portion 242 that is not fixed thereto. Due thereto, the cell main body 22 can be removed from the holder 12 together with the portion 242 that is not fixed. Thereafter, the portion 242 that is not fixed can be easily removed from the cell main body 22.

### <Third Embodiment>

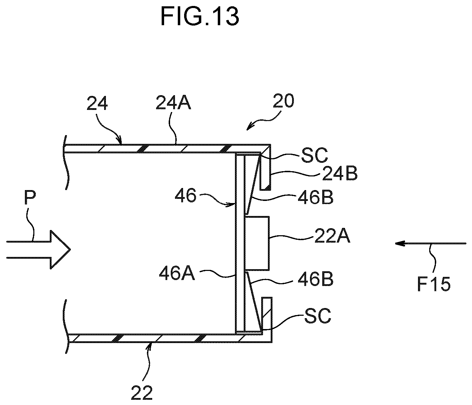

A portion of the energy storage cell 20 relating to a third embodiment of the present disclosure is illustrated in a cross-sectional view in Fig. 13. At this energy storage cell 20, the insulating film 24 does not have the easily-broken portion 28. Instead, at the energy storage cell 20, an insulating ring 46, which is provided between the axial direction one end surface of the cell main body 22 and the one end covering portion 24B of the insulating film 24, has two projections 46B. In the same way as in the energy storage device 10 relating to the first embodiment, in the energy storage device (not illustrated) that is structured to include a plurality of these energy storage cells 20, the plural energy storage cells 20 are inserted into the plural cell insertion holes 16 of the holder 12 (refer to Fig. 1 through Fig. 3) respectively, and the outer peripheral surface of the insulating film 24 is adhered to the inner peripheral surface of the cell insertion hole 16 by the adhesive 26.

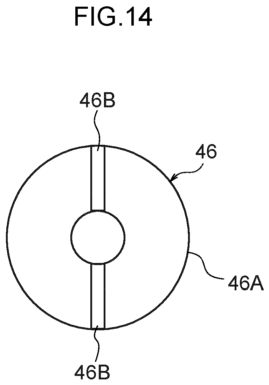

As illustrated in Fig. 13 and Fig. 14, the insulating ring 46 is formed in the shape of a disk, and is structured by a ring main body 46A disposed coaxially with the cell main body 22, and the two projections 46B provided at the surface of the ring main body 46A which surface faces the one end covering portion 24B. This insulating ring 46 is manufactured by injection molding of a resin for example. In this embodiment, the one end covering portion 24B corresponds to the "end surface covering portion" of the present disclosure.

A through-hole 48, which is round and through which the positive electrode 22A of the cell main body 22 is inserted, is formed in the central portion of the ring main body 46A. The two projections 46B are disposed at both ends in a radial direction across the center of the ring main body 46A (are disposed at opposite sides with the through-hole 48 therebetween). The two projections 46B are shaped as substantially triangular plates, and the projecting heights thereof from the ring main body 46A become larger the further toward the radial direction outer side of the ring main body 46A. At each of the projections 46B, a corner portion SC of an acute angle is provided at the end portion at the radial direction outer side of the ring main body 46A, and the respective corner portions SC contact the one end covering portion 24B.

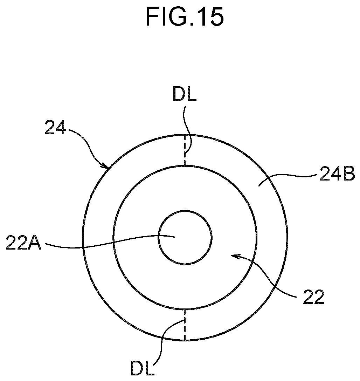

In this embodiment, due to the cell main body 22 being pushed from the axial direction another end side in the axial direction with respect to the insulating film 24, the one end covering portion 24B can be broken by the projections 46B (refer to dashed lines DL in Fig. 15). Due thereto, the insulating film 24 can be easily removed from the cell main body 22. Further, in the present embodiment, because the projections 46B are provided at both sides in a radial direction across the center of the ring main body 46A, the one end covering portion 24B can be broken at both sides in the radial direction of the cell main body 22. Due thereto, it is even easier to remove the insulating film 24 from the cell main body 22. Moreover, in the present embodiment, because the acute-angled corner portions SC of the respective projections 46B contact the one end covering portion 24B, it is easy to break the one end covering portion.

In the present embodiment, at the time of removing the cell main body 22 from the holder 12, the one end covering portion 24B of the insulating film 24 is broken by the projections 46B of the insulating ring 46 due to the cell main body 22 being pushed, from the axial direction another end side, in the axial direction with respect to the holder 12 and the insulating film 24. The cell main body 22 can thereby be easily removed from the holder 12 and the insulating film 24.

Although the present disclosure has been described above by exemplifying several embodiments, the present disclosure can be implemented by being modified in various ways within a scope that does not depart from the gist thereof. Further, the scope of the right of the present disclosure is, of course, not limited to the above-described respective embodiments.

## Claims

1. An energy storage cell comprising:
a cell main body shaped as a solid cylinder; and
an insulating film covering an outer peripheral surface of the cell main body, and having an easily-broken portion that breaks easily.

2. The energy storage cell of claim 1, wherein the easily-broken portion extends in a peripheral direction of the cell main body.

3. The energy storage cell of claim 2, wherein the easily-broken portion has a thin-walled portion at which a thickness of the insulating film is locally thin.

4. The energy storage cell of claim 3, wherein the thin-walled portion extends in an annular form continuously in the peripheral direction of the cell main body.

5. The energy storage cell of any one of claim 1 through claim 4, wherein:
the cell main body has a recess at the outer peripheral surface, and
the easily-broken portion is provided at a portion of the insulating film which portion faces the recess.

6. The energy storage cell of any one of claim 1 through claim 5, wherein a portion of the outer peripheral surface of the cell main body, which portion overlaps with the easily-broken portion in a radial direction of the cell main body, is covered by an insulating material.

7. The energy storage cell of claim 6, wherein a dimension of the insulating material in an axial direction of the cell main body is set to be larger than a dimension of the easily-broken portion in the axial direction.

8. An energy storage cell comprising:
a cell main body shaped as a solid cylinder;
an insulating film covering an outer peripheral surface of the cell main body, and having an end surface covering portion that covers an axial direction end surface of the cell main body; and
an electrically conductive portion that is electrically conductive, that is provided at a surface of the insulating film, and that has a peripheral direction extending portion extending in a peripheral direction of an outer peripheral surface of the insulating film, and a pair of contact portions extending from both ends of the peripheral direction extending portion and reaching the end surface covering portion.

9. An energy storage cell comprising:
a cell main body shaped as a solid cylinder;
an insulating film covering an outer peripheral surface of the cell main body, and having an end surface covering portion that covers an axial direction end surface of the cell main body; and
an insulating ring provided between the end surface of the cell main body and the end surface covering portion, and having projections at a surface facing the end surface covering portion.

10. The energy storage cell of claim 9, wherein the projections are provided respectively at both sides in a radial direction across a center of the insulating ring.

11. The energy storage cell of claim 9 or claim 10, wherein the projections have acute-angled corner portions, and the corner portions contact the end surface covering portion.

12. An energy storage device comprising:
a holder in which a cell insertion hole is formed; and
the energy storage cell of any one of claim 1 through claim 7 that is inserted in the cell insertion hole, and at which an outer peripheral surface of the insulating film is fixed to an inner peripheral surface of the cell insertion hole at a place that is offset from the easily-broken portion in an axial direction of the cell main body.

13. An energy storage device comprising:
a holder in which a cell insertion hole is formed; and
the energy storage cell of claim 8 that is inserted in the cell insertion hole, and at which an outer peripheral surface of the insulating film is fixed to an inner peripheral surface of the cell insertion hole at a portion overlapping with the pair of contact portions.

14. An energy storage device comprising:
a holder in which a cell insertion hole is formed; and
the energy storage cell of claim 9 that is inserted in the cell insertion hole, and at which an outer peripheral surface of the insulating film is fixed to an inner peripheral surface of the cell insertion hole.

15. The energy storage device of any one of claim 12 through claim 14, wherein the outer peripheral surface of the insulating film is adhered to the inner peripheral surface of the cell insertion hole.
